Europäisches Patentamt

(19) European Patent Office

Office européen des brevets

(11) **EP 0 755 776 A1**

## (12) EUROPEAN PATENT APPLICATION

(43) Date of publication:
29.01.1997 Bulletin 1997/05

(51) Int. Cl.$^6$: **B32B 27/08**, G09F 3/02,
B42D 15/10

(21) Application number: 95202069.1

(22) Date of filing: 28.07.1995

(84) Designated Contracting States:
DE
Designated Extension States:
LT SI

(71) Applicant: **Minnesota Mining and Manufacturing Company**
**St. Paul, Minnesota 55144-1000 (US)**

(72) Inventors:
• **Kirchmeyer, Domenica**
**D-41453 Neuss (DE)**

• **Kuester, Wilhelm**
**D-41453 Neuss (DE)**
• **Pastore, Luigi**
**D-41453 Neuss (DE)**

(74) Representative: **Wilhelm, Stefan et al**
**3M Laboratories (Europe) GmbH**
**Office of Intellectual Property Counsel**
**Hansastrasse 9**
**41453 Neuss (DE)**

### (54) Multilayer film

(57)    1.The invention refers to a multilayer film, comprising a cover layer (1) bearing on one side a damagable, in particular a destructible or irreversibly deformable or permanently distortable layer (2), and an adhesive layer (3) for bonding with a substrate (4), whereby the sequence of layers (2) and (3) may be reversed, said layer (2) exhibiting a three-dimensional pattern imparting a three-dimensional verification marking to the film, and said film showing intralayer failure when being peeled from the substrate (4).

Figure 1a:

Figure 1b:

EP 0 755 776 A1

## Description

1.Field of the Invention

The present invention relates to a multilayer film comprising a cover layer bearing on one side a damagable, in particular a destructible, irreversibly deformable or permanently distortable layer and an adhesive layer for bonding with a substrate. The present invention furthermore refers to the use of the multilayer film as a tamper-proof label or for protection of data on documents.

Background of the Invention

2.Different types of multilayer films and similar constructions are known which are intended to be used to protect writing, especially data on documents, from attempts at tampering or to protect labels, such as price tags, from manipulation such as removing and readhering.

3.A known technology for protection of documents, such as identification cards and driver's licenses, consists of a multilayer film where microspheres are imbedded in a binder in one layer. Directly under the microspheres is a retroreflective customer-specific printing which can be observed under retroreflective conditions. Under this binder layer is a layer of pressure sensitive adhesive or heat-activated adhesive that serves to attach the film to the document. This type of construction, known for example from US 3,801,183; US 4,630,891; US 5,080,563; and US 5,169,707, offer a high degree of protection against tampering because the technology used in the retroreflective customer-specific printing cannot be imitated with traditional equipment. These constructions have the disadvantage, however, in that in order to view the customer-specific printing, equipment for retroreflective viewing is necessary. The tamper proof label described in US 5,346,259 also requires using a specially designed authentication viewer.

4.DE 25 11 367 describes a tamper-proof recording medium comprising several layers where the document is laminated between two films, and where a pattern of adhesion-reducing coating has been applied to either the film or the document, so that very little or no adhesive bond is formed between the film and the document in areas where the adhesion-reducing coating is present. Normally, an attempt to tamper with a construction of this type would result in destruction of the document. In this case as well, however, professional tamperers are capable of removing the film carefully so that the substrate is not damaged.

5.The brochure "3M ID Security Laminate Series 3000" Order No. 75-0500-00377-3 (24.5) IR (1992) from 3M Comp., St. Paul, USA, describes a security laminate for use when only a certain amount of security is required. The laminate consists of two layers, between which lies a customer-specific printing which cannot be photocopied and which is destroyed when delamination is attempted.

6.Multilayer films for increasing the tamper-resistance of documents, where the tamper-resistance depends on the integrity of an intermediate layer having certain optical properties such as a kinegram or a hologram, are described in EP 0,253,089, and EP 0,401,466 and US 5,066,041. The layer with optical properties is used in combination with a usual film, which itself has only a limited level of tamper-resistance. During an attempt at tampering, the hologram would be destroyed. Kinegrams which are commercially available from Landis & Gyr, Zug, Switzerland and others, and holograms are very attractive from an aesthetic point of view and they can be used to incorporate user-specific graphics or information into the film. Extending the hologram or kinegram over the entire surface of the document is, however, usually not desirable because of problems of handleability and high costs.

7.US 4,876,123 and US 5,082,702 describe tamper-proof films and tapes which are not transparent. The multilayer constructions are destroyed during attempts at tampering, both sides of the separated film layers showing a color printing which was originally concealed. A laminate which works in a similar way is described in US 4,429,015 where fibers are pulled off of the document when attempts are made to remove the cover film and where the parts cannot be laminated together again without visible damage.

8.DE 28 03 434 describes a self-adhesive clear film having a layer of printed adhesive. When the document is tampered with, this printing remains on the document substrate. When a tamperer desires to exchange a photograph, for example, then the printed pattern must be reproduced on the new photo, a task which is relatively simple for a professional tamperer.

9.FR 2,451,081 describes a multilayer safety laminate for documents which contains an intermediate layer containing ink-filled microcapsules. Upon tampering, the capsules break and lead to discoloration of the document. This construction has the disadvantage, however, that the microcapsules reduce the transparency of the film and that normal use of the document can lead to breakage of the microcapsules.

10.DE 36 08 907 describes an adherable material for labels where an underlying tearable layer is destroyed when a surface layer is manually removed. This material is non-transparent as the easily tearable layer is preferably an aluminum vapor coating which has adhesive on both sides, the adhesives differing in their adhesive strength. Between the tearable layer and the lower adhesive layer is a pattern of an adhesion-reducing coating. A cover layer can be printed as well and the entire construction used as a tamper-proof tape or safety label. Removal of the tape or label leads to an irreversible destruction of the largely two-dimensional non-transparent metal layer. Similar multilayer constructions with largely flat, very thin, non-transparent frangible layers are known from US 3,925,584 and EP 0,170,712.

11.Further descriptions of tamper-proof labels can be found in US 4,121,003 and US 4,184,701. These labels have a transparent cover layer which has a printed pattern on its inner surface. The printed pattern is destroyed when the cover layer is removed.

12.A method for manufacturing tamper-proof documents which is related to one of the previously described multilayer films is described in DE 29 52 322. In this process, a document is laminated with a polyethylene film which has an adhesive coating comprising a radiation cross-linkable mass of ethylenically unsaturated oligomers or polymers based on urethane-modified polyepoxides. The film is laminated to the document in such a way that the cross-linkable mass comes in contact with the document. The laminate is then exposed to a cross linking radiation (UV radiation). In this case the document is provided with a very high level of protection from tampering. However, treatment of the laminate with UV radiation is necessary, which in practice would require undesirable investment in equipment and associated safety measures because every distribution point which issues such documents would need such UV-radiation equipment.

13.EP 0,013,418 describes an identity card comprising an outer transparent thermoplastic cover which is laminated with a thermoplastic core. The core can comprise several layers containing, at a suitable point on one or several layers, information which serves for the identification of the card holder, and additional security markings. The core layers enclose a support layer which is perforated, porous and/or provided with holes and is comprised of a material which is dimensionally stable even under rigid laminating conditions. Similar constructions are described in EP 0,011,684 and EP 0,013,021.

14.Copending German patent application DE 44 24 148.8 filed by the present applicant on July 8, 1994, provides a transparent multilayer film comprising a cover layer, a continuous destructible or irreversibly deformable layer, respectively, with a thickness of at least 10 $\mu$m, a pattern of adhesion-regulating material between said layers and an adhesive layer for bonding with a substrate. The multilayer film is proposed for use as a tamper-proof label or for protection of data on documents.

15.The numerous multilayer films provided in the state of the art do, however, not fulfill all practical requirements of a high degree of tamper-resistance, a high aesthetic appeal, a simple and relatively inexpensive method of production, a wide applicability and, if desired, a high transparency to a sufficient and/or satisfactory degree. Therefore there still is a need for providing multilayer films which meet the above requirements to a higher and/or different degree and/or which broaden the pool of multilayer films available.

16.<u>Summary of the invention</u>

The present invention relates to a multilayer film comprising a cover layer (1) bearing on one side a damagable layer (2) and an adhesive layer (3) for bonding with a substrate (4) wherein the sequence of layers (2) and (3) may be reversed, said layer (2) exhibiting a three-dimensional pattern, and said film showing intralayer failure when being peeled from the substrate. Layer (2) imparts a three-dimensional or embossed structure to the multilayer film which is visible and tangible, thus providing an inherent verification marking ("watermark")

17.The multilayer film may comprise other layers such as one or more patterns of adhesion regulating material (5), one or more damagable, in particular destructible or irreversibly deformable or permanently distortable continuous layers (6) and/or one or more additional verification markings such as holograms or kinegrams.

18.Especially preferred are multilayer films comprising one of the following layer sequences:
(1)/(5)/(2)/(3)
(1)/(5)/(3)/(2)
(1)/(5)/(6)/(2)/(3)
(1)/(5)/(6)/(3)/(2)

19.The invention furthermore refers to the use of the multilayer film for the protection of data on documents or as a tamper-proof label.

20.The dependent claims define further embodiments of the invention. The preferred embodiments and advantages of the present invention will be described with reference to the drawings.

21.<u>Brief description of drawings</u>

Fig. 1a shows a multilayer film of the present invention having the layer sequence (1)/(2)/(3)/(4), in intact form.
Figs. 1b -1h show possible failure patterns of the multilayer film of Fig. 1a when this is subjected to tampering.
Fig. 2a shows a multilayer film of the present invention having the layer sequence (1)/(3)/(2)/(4), in intact form.
Fig. 2b shows a possible failure pattern of the multilayer film of Fig. 2a when this is subjected to tampering.
Fig. 3a shows a multilayer film of the present invention having the layer sequence (1)/(5)/(2)/(3)/(4), in intact form.
Fig. 3b shows a possible failure pattern of the multilayer film of Fig. 3a when this is subjected to tampering.

Fig. 4a shows a multilayer film of the present invention having the layer sequence (1)/(5)/(3)/(2)/(4), in intact form.

Fig. 4b shows a possible failure pattern of the multilayer film of Fig. 4a when this is subjected to tampering.

Fig. 5a shows a multi layer film of the present invention having the layer sequence (1)/(5)/(6)/(2)/(3)/(4), in intact form.

Figs. 5b-5f show possible failure patterns of the multilayer film of Fig. 5a when this is subjected to tampering.

Fig. 6a shows a multilayer film of the present invention having the layer sequence (1)/(5)/(6)/(3)/(2)/(4), in intact form.

Fig. 6b shows a possible failure pattern of the multilayer film of Fig. 6a when this is subjected to tampering.

Figs. 7a and 7b show embodiments of the 3-dimensional pattern of destructible or irreversibly deformable, respectively, discontinuous layer (2).

Detailed description of the ilustrative embodiments of the present invention

22. The figures are not to scale and do not limit the invention. The thicknesses of the various layers shown in the figures may be exaggerated in order to illustrate the present invention more clearly.

23. The multilayer film in accordance with the present invention may be used with documents such as driver's licenses. The multilayer film is preferably sufficiently transparent that the underlying document can be read and/or be transparent to any other radiation, e.g. UV light which may be used for verification purposes. The multilayer film is preferably sufficiently flexible and robust that storage in a wallet or back-pocket does not result in damage to the document or delamination of the multilayer film. The multilayer film according to the present invention may preferably protect the document against typical household solvents and liquids.

24. The cover layer (1) of the multilayer film according to the invention typically is a polymeric film which is preferably dimensionally stable, wear resistant, tear resistant, abrasion resistant and/or solvent resistant. The cover layer may be corona-treated, flame-treated, plasma-treated or treated with a chemical primer.

25. Methods for the treatment of surfaces are described, for example, in G. Habenicht et al., Adhäsion, 1992(5), pp. 21-36 and in K.W. Gerstenberg, Coating, 1990, pp. 260-263.

26. A material which is preferred for this purpose is, for example, a polyethylene terephthalate (PET) polymeric film. The dimensionally stable, wear resistant, tear resistant, abrasion resistant and/or solvent resistant cover layer (1) protects the underlying layers of the laminate and the document itself from wear, dirt, moisture and other undesirable influences during the length of its entire life. Such documents intended for long-term use include, for example, driver's licenses, passports and personal identification papers. The film seals the document, thus protecting it from undesirable changes which can occur due to constant use. In order to provide the laminate and the document, respectively, with sufficient stiffness and resistance to folding, the cover layer preferably has a thickness of from 10 to 200 μm and more preferably from 15 to 150 μm. Especially preferred is a thickness from about 25 to about 75 μm. In order to improve adhesion to the underlying layer, the film is preferably treated with corona discharge or with a chemical primer. The primer can be applied in the customary manner, for example with a coating rod, at a usual thickness of up to about 1μm.

27. The cover layer (1) bears on its inner side a damagable in particular a destructible or irreversibly deformable or permanently distortable discontinuous or continuous layer (2), and an adhesive layer (3) for bonding with a substrate (4) wherein the sequence of layers (2) and (3) may be reversed.

28. Layer (2) may exhibit a discontinuous 3-dimensional pattern which can be obtained, for example, by die-cutting a continuous precursor film of layer (2). The continuous precursor of layer (2) can also be passed through embossed rolls. If layer (2) can be melted without decomposition, the molten adhesive can also be filled, for example, into a jig exhibiting the desired discontinuous 3-dimensional pattern. These methods for preparing layer (2) are intended to illustrate the invention only without limiting it.

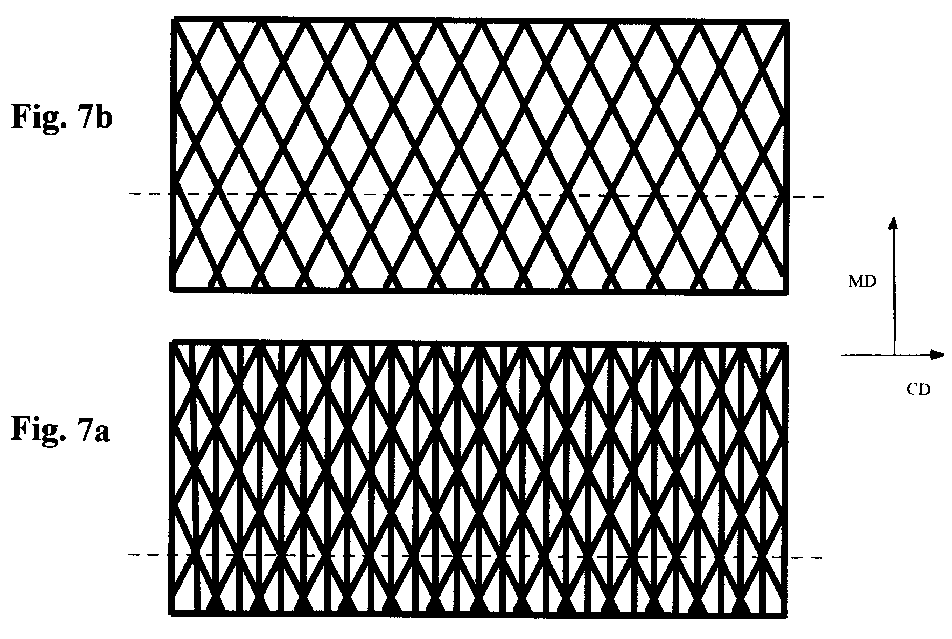

29. Layer (2) preferably has a thickness of at least 10 μm. The thickness preferably is between 10μm to 500μm, more preferably between 20 to 400 μm and, in particular, between 30 to 300 μm. The discontinuous 3-dimensional pattern may comprise recesses which, when considering cross- or longitudinal sections of layer (2), may extend over part of the thickness or over the entire thickness of layer (2) in which latter case the recesses may be termed as holes. The discontinuous pattern shown in Fig. 7b may comprise, for example, holes which are separated by bars to form rhombic meshes. The 3-dimensional layer (2) may also comprise elevations. Continuous layers (2) having a discontinuous pattern comprising only recesses or elevations are preferred. Recesses are particularly preferred. The average height of the elevations or the average depth of the recesses preferably exceeds half the thickness of layer (2). Preferably, at least 50% and more preferably at least 75% of the recesses extend over at least half of the thickness of layer (2). The recesses and/or elevations may exhibit various shapes which may be regular or irregular. The ratio of the sum of the zones or areas of recesses and/or elevations to the total area of layer (2) preferably is between 0.05 to 0.85 and more preferably between 0.10 and 0.8.

30. The 3-dimensional nature of the pattern of layer (2) imparts a 3-dimensional structure or embossing to the multilayer film in the shape of the pattern which is visible and tangible at the surface of the film. The 3-dimensional pattern which can be tailor-made for any customer and comprises, for example, customer-specific logos or specific patterns such as the eagle symbol of the Federal Republic of Germany, provides an additional verification marking to the film which might be referred to as a 3-dimensional watermark. The visibility of the pattern may be increased by incorporating inks into layer (2) which may be visible with the naked eye or with the assistance of other radiation sources such as a UV-lamp. A preferred ink, is, for example Bayhydrol 123 (a water-based polyurethane ink, available through Miles Inc.). The inks preferably comprise up to 50 parts by weight with respect to the mass of the resulting mixture of one or more pearlescent pigments (available from E. Merck, Darmstadt as Iriodin®). The inks can also be applied to a continuous precursor of layer (2) by printing techniques such as screen-printing or flexographic printing. Pearlescent pigments have the advantage that their color depends on the angle of viewing so that they cannot be reproduced by photographic methods.

31.The diameter of the elements or segments of the discontinuous 3-dimensional pattern of layer (2) can vary widely but are chosen in order to impart a recognizable verification marking to the multilayer film. The term element or segment denotes the smallest substructures of the pattern such as simple geometric figures like lines, circles, triangles, squares etc., numbers or characters, small and meaningful parts of a picture and the like. The average diameter of the elements or segments of the 3-dimensional pattern preferably is less than 20 mm, more preferably less than 10 mm and especially not more than 7 mm.

32.Fig. 7a shows the 3-dimensional pattern of layer (2) which was used in Examples 1, 2, 3, 7 and 8. The pattern comprises rhombic meshes which contain reinforcing, connecting bars. In this case, the mesh size was 3.5 x 5.5 mm, and the thickness of both the outside and reinforcing bars was 0.3 mm.

33.Fig. 7b shows a related pattern which differs from that of Fig. 7a in that the connecting bars in the rhombic meshes are missing. This pattern was used in Examples 4, 5, 6 and 9. The 3-dimensional patterns of Fig. 7a and b are illustrative only and do by no means limit the invention.

34.Due to its 3-dimensional pattern, discontinuous layer (2) shows a pronounced anisotropic response when being subjected to tensile stress. A quantitative measure of the tensile behavior is the internal strength at break which is defined as the tensile strength at break multiplied by the cross-sectional area of layer (2) in the direction of tear.

35.For the discontinuous layer (2) according to Fig.7a, the internal strength in the direction of the bars is distinctly higher than the internal strength orthogonal to this direction. When preparing the material according to Fig. 7a continuously by passing a continuous precursor material, for example, through embossed rolls, the embossed pattern is preferably chosen in such a way that the machine direction more or less coincides with the direction of the bars in order to facilitate handling of the material. The term machine direction (MD) is used in the following to denote that direction of layer (2) exhibiting the highest internal strength. The direction which is orthogonal to this direction, is termed the cross-direction (CD). MD and CD are indicated in Fig. 7.

36.A discontinuous layer (2) with the 3-dimensional pattern of Fig. 7b exhibits a distinctly lower internal strength in the machine-direction than the material according to Fig. 7a. The rhombic meshes of discontinuous layer (2) according to Fig. 7b are deformed when being stretched in the machine-direction with subsequent layer failure.

37.The anisotropic behavior of layer (2) can be quantitatively taken into account by using the arithmetic mean $^a\mathrm{I}_2$ of the internal strength at break in the cross-direction $^c\mathrm{I}_2$ and in the machine-direction $^m\mathrm{I}_2$:

$$^a\mathrm{I}_2 = 1/2 \, ( \, ^c\mathrm{I}_2 + \, ^m\mathrm{I}_2 )$$

38.The internal strengths of layer (2) at break $^a\mathrm{I}_2$ , $^c\mathrm{I}_2$ and $^m\mathrm{I}_2$ depend on the internal strength of the continuous precursor material which can be used for the preparation of layer (2), and on the 3-dimensional pattern of layer (2).

39.Damagable layer (2) is preferably designed to be the weakest point in the multilayer film according to the invention and hence the predetermined failure point of the film. Layer (2) is preferably destructible, irreversibly deformable or permanently distortable. In a preferred embodiment of the multilayer film according to the invention, the internal strength $^a\mathrm{I}_2$ is less than 12 N, preferably less than 8 N, more preferably less than 5 N and especially-preferred less than 3 N. In another preferred embodiment of the multilayer film according to the invention, the internal strength in cross-direction $^c\mathrm{I}_2$ is less than 5 N, preferably not more than 4 N, more preferably less than 2.5 N and especially preferable less than 1.5 N.

40.In an especially preferred embodiment of the multilayer films according to the present invention, layer (2) is designed as to exhibit simultaneously an internal strength $^a\mathrm{I}_2$ of less that 9 N and more preferably of less than 7 N and an internal strength $^c\mathrm{I}_2$ of less than 4.5 N and more preferably of less than 2 N.

41.In another preferred embodiment of the multilayer films according to the present invention, the internal strength $^a\mathrm{I}_2$ and/or $^c\mathrm{I}_2$ of layer (2) is preferably lower than the adhesion $A_{12}$ between the cover layer (1) and the continuous precursor of layer (2), and also lower than the adhesion $A_{23}$ between the adhesive layer (3) and the continuous precursor of layer (2). The above definition of $A_{12}$ and $A_{23}$ is made with reference to the precursor of layer (2) because of the difficulty of measuring adhesion values between layer (1) and finished layer (2) or between layer (3) and finished layer (2) due to the discontinuous structure of layer (2) in its final form.

42.Layer (2) preferably comprises a heat-activatable or a pressure-sensitive adhesive. Preferred examples of the heat-activatable adhesive include ethylene vinyl acetate (EVA) copolymers, ethylene acrylic acid copolymers, ethylene methacrylic acid copolymers, polyesters, polyamides and polyurethanes. Especially preferred are polyamides. Preferred pressure-sensitive adhesives comprise, for example, copolymers of (meth)acrylic acid esters.

43. Heat-activatable adhesives are preferred for layer (2). Preferred examples are the commercially available heat-activatable adhesives Texiron™ 115, 116/20, 116/30, 121 and 126 (polyamide heat-activatable adhesives), Texiron™ 322 and 332 (EVA heat-activatable adhesives), Texiron™ 622 (polyurethane heat-activatable adhesive) and Texiron™ 925 and 946 (PET heat-activatable adhesives). All Texiron™ materials are commercially available through Protechnic, Cernay, France. The Texiron™ polyamide heat-activatable adhesives are especially preferred.

44. Adhesive layer (3) which forms the bond to substrate (4) is preferably selected from a group of adhesives comprising pressure-sensitive adhesives, heat-activatable adhesives and reactive adhesives. Preferred are pressure-sensitive adhesives, for example those based on acrylates which are described in some detail, for example, in Handbook of Pressure Sensitive Adhesive Technology, ed. by D. Satas, New York 1989, pp. 396 - 456. Adhesive layer (3) can be introduced into the multilayer film as a transfer film, or it can be coated on adjacent layers as an organic or aqueous solution or dispersion with subsequent evaporation of the solvent and optional curing, or as a solvent-free, pre-polymerized syrup with subsequent curing. Adhesive layer (3) is preferably applied as a transfer tape.

45. Adhesive layer (3) is preferably selected to exhibit a high and permanent adhesion $A_{34}$ to substrate (4) and a high adhesion $A_{23}$ to the continuous precursor of layer (2). $A_{23}$ is preferably larger than $^a l_2$ or $^c l_2$. The person skilled in the art may select an appropriate adhesive material for layer (3) from the group of preferred adhesives mentioned above without undue burden. The adhesive layer typically has a thickness between 10 and 150 µm, preferably between 15 and 75 µm and more preferably between 20 and 60 µm.

46. The multilayer films according to the present invention preferably are transparent. The materials for the layers may be chosen from those specified above so as to make transparency of the whole multilayer film possible.

47. The multilayer film can be used for the protection of data on documents or as a tamper-proof label and can be applied to a great variety of substrates (4) comprising paper substrates based on synthetic or natural fibres, which optionally may be coated, polymer substrates such as, for example, polyvinyl chlorides, polyesters, polyolefins, polystyrenes, polycarbonates or acrylonitrile-butadiene-styrenes, glass substrates or metal substrates which optionally may be painted. The enumeration of substrates is intended to illustrate the invention only without limiting it. Polyolefin or polystyrene substrates are typically used in less demanding applications like, for example, packaging.

48. The method used for the preparation of the multilayer films according to the invention is not particularly critical. Preferably, layer (2) is laminated at room temperature, or at slightly elevated temperatures, to adhesive layer (3) forming part of a transfer film. Subsequently, cover layer (1) is laminated at a temperature of about 110 - 150°C to one of the sides of the laminate comprising layers (2) and (3).

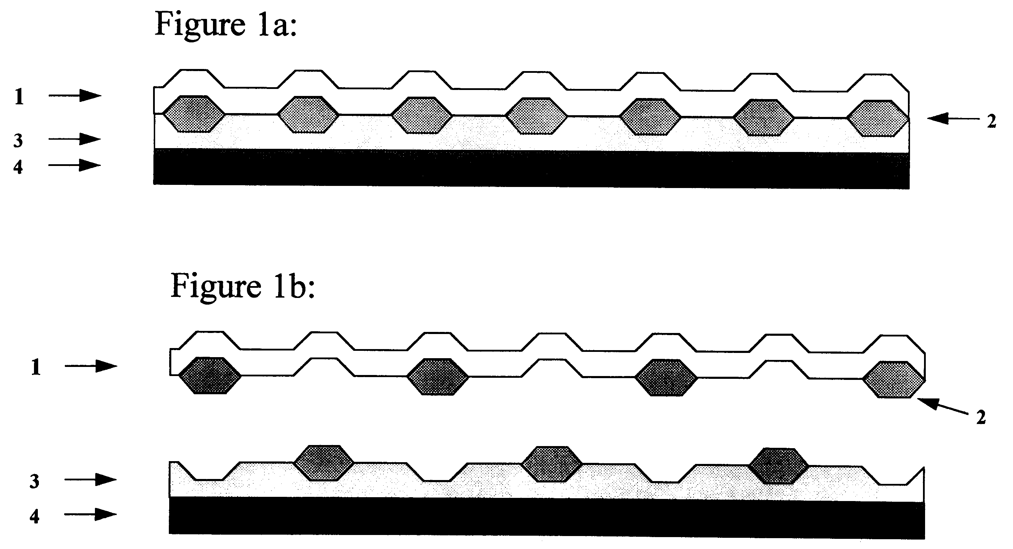

49. Fig. 1a shows an embodiment of the multilayer film according to the present invention in intact form. The cover layer (1) is bonded to a grid-shaped layer (2) exhibiting a regular 3-dimensional or embossed structure such as the patterns shown in Fig. 7a or 7b. Fig. 1a corresponds, for example, to the longitudinal section of a multilayer film comprising a layer (2) according to Fig. 7a or 7b with the cutting direction being indicated by the dashed lines. Fig. 1a is intended to be illustrative but by no means limiting. The adhesive layer (3) bonds the multilayer film comprising layers (1), (2) and (3), to substrate (4).

50. In case of a tampering attempt the multilayer film according to the present invention is irreversibly destroyed or deformed or distorted, showing intralayer failure. The term intralayer failure means that at least one of the layers of the multilayer film is damaged. Manipulation can be detected both by visual and tangible inspection which increases the tamper-resistance of the multilayer film.

51. Although layer (2) is preferably designed to be the weakest point in the multilayer film, this will not necessarily break through layer (2) when subjected to tampering. Possible failure patterns which were all observed in practice, are schematically shown in Figs. 1b - 1h.

52. In Fig. 1b, the integrity of layer (2) is destroyed while the adhesive layer (3) remains essentially intact on the substrate (4).

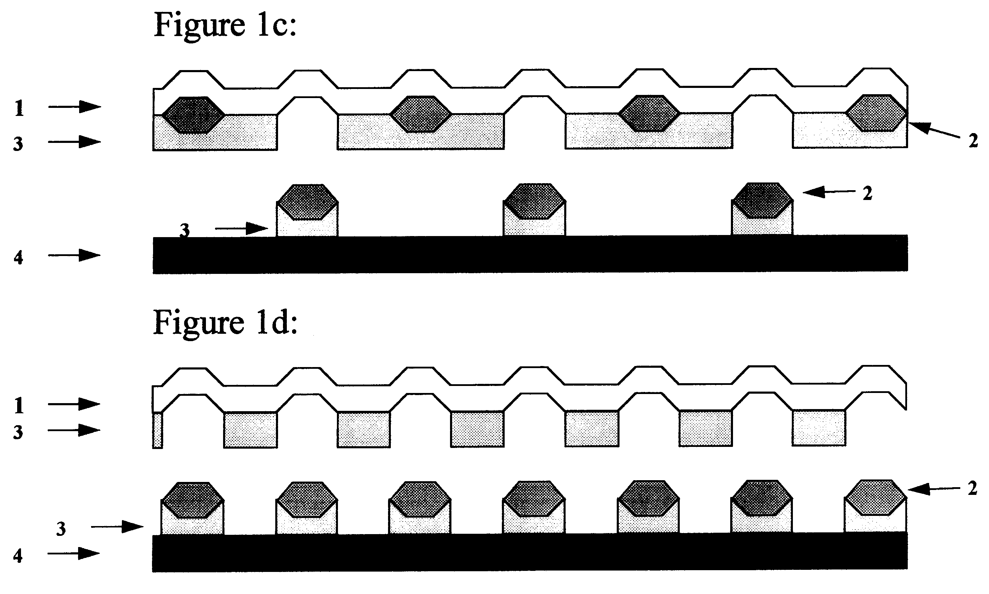

53. In Fig. 1c, the integrity of layer (2) and layer (3) are destroyed. Layer (3) remains only partly adhered to the substrate (4).

54. In Fig. 1d, the multilayer film breaks through the adhesive layer (3) while layer (2) remains essentially intact.

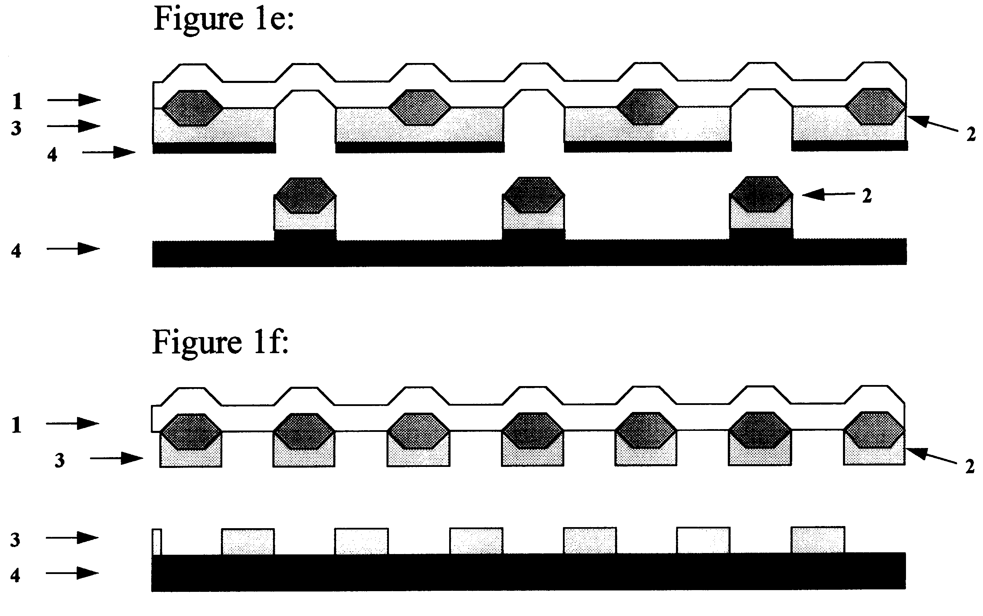

55. Fig. 1e shows a more complicated failure pattern wherein layer (2), adhesive layer (3) and substrate (4) are destroyed.

56. The failure pattern of Fig. 1f is similar to that of Fig. 1d in that the film breaks through adhesive layer (3). While in Fig. 1d, however, layer (2) remains essentially attached to the adhesive layer, layer (2) essentially stays with cover layer (1) in case of Fig. 1f.

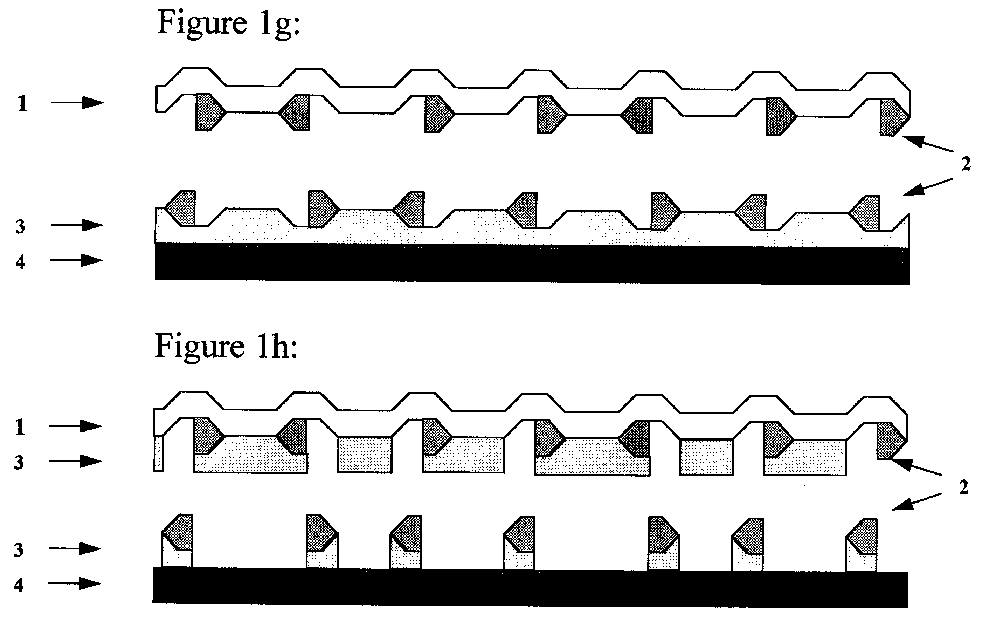

57. Figures 1g and 1h show a more complicated failure pattern of layer (2). In Fig. 1g the multilayer film breaks through layer (2) which partly stays with layer (1) and layer (3), respectively. In Fig. 1h the multilayer film breaks through layer (2) and (3) which both are completely destroyed.

58. Figs. 1b - 1h show the most frequent failure patterns of the multilayer film according to Fig. 1a. It should be noted that Figs. 1a - 1h are schematic representations only. When peeling the multilayer film from substrate (4), the layers (1) - (3) will typically be stretched and deformed first whereby the degree of deformation typically is different for the 3 layers. If removal forces continue to be applied, the multilayer film finally breaks and is irreversibly destroyed. The representations of Figs. 1b - 1h are idealized and simplified, and the failure patterns observed in reality, are often intermediate between the failure patterns displayed.

59. There are several reasons for the multitude of failure patterns observed. The failure process is relatively complex and is influenced by various parameters such as the elasticity or brittleness, respectively, of the different layers, the tensile strength of the materials used and the adhesion between adjacent layers, the thickness of the different layers, the respective pattern of discontinuous layer (2), the peel direction and peel angle, the peel strength and peel speed and the temperature used during peeling. The peeling process may also be modified by using mechanical and/or chemical tools. The failure pattern may change when varying one or more of these parameters. When selecting layers (1), (2) and (3) of the multilayer film in a way that $^a I_2$ and/or $^c I_2$ is lower than $A_{12}$, $A_{23}$ or the adhesion $A_{34}$ between adhesive layer (3) and substrate (4), the multilayer film should ideally break through layer (2). On tampering, the internal strength of layer (2) may increase, however, as a result of stretching and simultaneous orientation of the macromolecules in layer (2), so that one or more other areas of the film have similar or even less internal strength and/or adhesion with respect to adjacent layers in comparison to $^a I_2$ and/or $^c I_2$.

60. Irrespective of the specific failure pattern, however, the multilayer films of the present invention are damaged, in particular deformed and/or destroyed and/or distorted irreversibly on tampering, showing intralayer failure. The multilayer films of the present invention exhibit an increased sensitivity to tampering because manipulation will destroy the 3-dimensional "watermark" imparted to the film by layer (2), which changes both the visual and tangible appearance of the film.

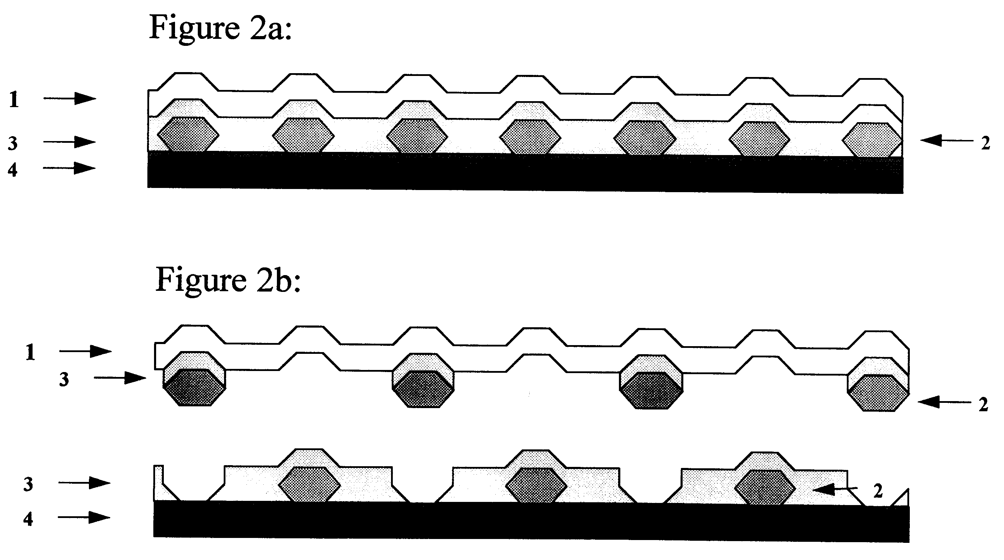

61. Fig. 2a shows another embodiment of the multilayer film according to the present invention in intact form wherein the sequence of layers (2) and (3) has been reversed with respect to the film construction shown in Fig. 1a.

62. In case of a tampering attempt, the film is damaged, in particularly deformed and/or destroyed and/or distorted irreversibly. Fig. 2b shows a schematic and simplified representation of a typical failure pattern whereby both layers (2) and (3) break.

63. The multilayer film according to Fig. 2a can show various other failure patterns, and considerations corresponding to those for the multilayer film of Fig. 1a, apply here.

64. The multilayer films of Fig. 1 and 2 exhibit

- a simple construction
- an inherent verification marking provided by the discontinuous, 3-dimensional pattern of destructible layer (2)
- a high tamper-resistance
- a high transparency

and they are highly attractive from an aesthetic point of view because the verification marking is both visible and tangible. These films thus meet the practical requirements to be fulfilled by tamper-proof labels or tamper-proof cover layers on documents to a high degree. The multilayer films of Figs. 1 and 2 are therefore of considerable economic importance.

65. The properties of the basic multilayer film constructions according to Figs. 1 and 2 can be modified and/or optimized with respect to specific applications by incorporating additional layers as will be described in the following in some detail.

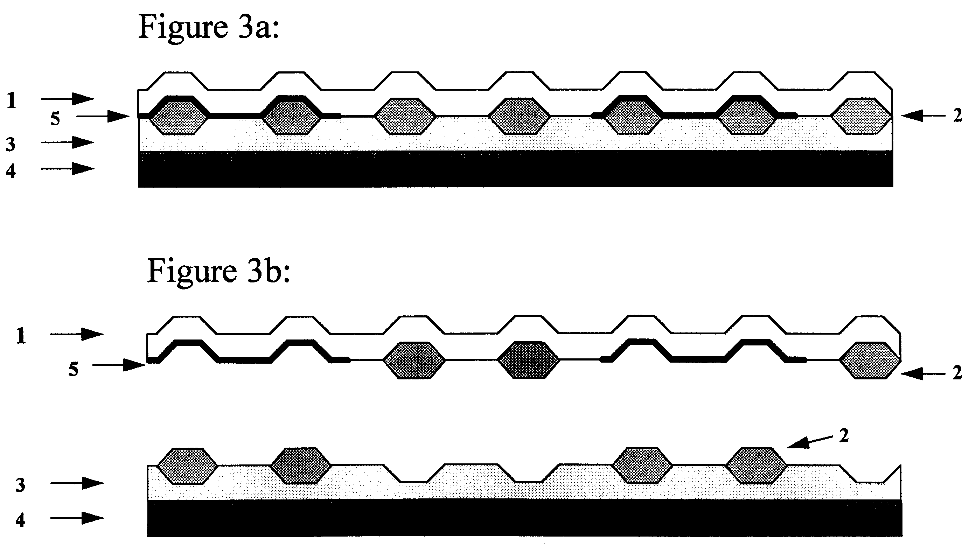

66. In the embodiment of multilayer films according to the present invention which is shown in Figs. 3a and 3b, a pattern of an adhesion-regulating material (5) is applied onto the inner surface of cover layer (1) in a non-continuous fashion. The adhesion regulating material (5) covers only part of the inner surface of the cover layer (1) thus creating surface areas with different adhesion properties. While adhesions $A_{12}$ and $A_{13}$ are high in areas where the adhesion-regulating material is absent, adhesion $A_{35}$ between the adhesion layer (3) and adhesion regulating material (5) and $A_{25}$ between the precursor of layer (2) and layer (5) are very low in areas where the adhesion-regulating material is present. Adhesions $A_{35}$ and $A_{25}$ preferably are substantially less than $^a I_2$ and/or $^c I_2$, and $A_{35}$ amounts, for example, to about 1/10 of $^a I_2$ and/or $^c I_2$ or less. In areas where the adhesion-regulating material is present, there is often practically no adhesion between cover layer (1) and adhesive layer (3). In the construction according to Fig. 3, the pattern of the adhesion-regulating material (5) and the pattern of the destructible layer (2) must be different from each other or must at least not match.

67. Several materials can be used as adhesion-reducing or adhesive repellent substances in order to create pattern (5). Examples of these materials include carbamates like polyvinyl octadecyl carbamate, available under the name "Kalle release coat K" from Hoechst AG, Germany, or "Escoat P 20" from Aderson Development Company, USA Further suitable materials include silicone systems like UV-curable free-radical silicone-acrylate release coatings, silicone addition systems, silicone condensation systems and cationically-curing silicone systems. The pattern (5) of this material is applied to the inner side of cover layer (1), preferably after the cover layer (1) has been surface-treated as mentioned above. A more complete description of both the silicone and non-silicone based adhesion-regulating materials and their use to create patterns (5) can be found, for example, in US 5,061,535 which is incorporated by reference. The type of pattern used in the present invention is not critical as long as it does not match the pattern of the destructible layer (2). The average dimension of the elements or segments of the release pattern (5) preferably is larger than the average dimension of the elements or segments of the pattern of layer (2). Any suitable pattern such as, for example, crossed lines, dot patterns, checkerboard patterns or diamond-shaped patterns can be used. The pattern (5) covers preferably 5 to 80% and more preferably 20 to 60% of the surface of the cover layer (1).

68. The adhesion regulating pattern (5) is preferably applied by using a flexographic printing method.

69. Fig. 3a shows a preferred multilayer film according to the present invention exhibiting the layer sequence (1)/(5)/(2)/(3), in intact form. When attempts are made to remove cover layer (1), adhesive layer (3) and layer (2) separate from cover layer (1) in areas where adhesion-regulating pattern (5) is present. Destructible layer (2) and/or adhesive layer (3) thus experience negligible stretching in areas where adhesion-regulating pattern (5) is present but strong stretching in all other areas which results in an irreversible overall stretching. Upon further pulling the multilayer film will finally break.

70. In the schematic and simplified failure pattern according to Fig. 3b, the film breaks through layer (2).

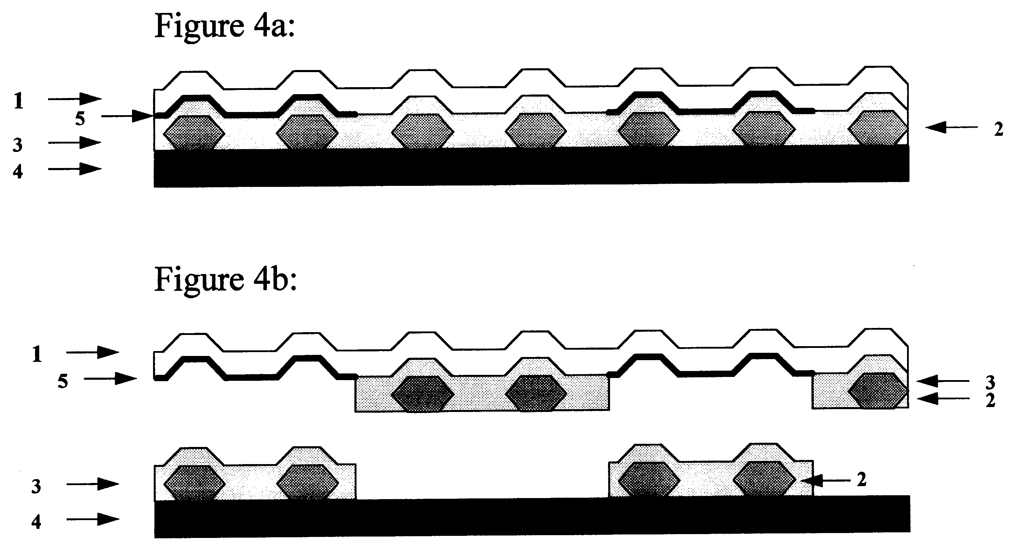

71. Fig. 4a shows a further preferred multilayer film according to the present invention exhibiting the layer sequence (1)/(5)/(3)/(2) in intact form. Fig. 4b shows that in case of a tampering attempt, adhesive layer (3) separates clearly from cover layer (1) in areas where the adhesion regulating pattern (5) is present. In the other areas, adhesion $A_{13}$ is distinctly stronger which can result in the failure pattern shown in Fig. 4b schematically and in simplified form.

72. The failure patterns of Fig. 3b and 4b shown for the multilayer films of Figs. 3a and 4a, illustrate the response of the multilayer films to tampering efforts but various other failure patterns are possible and considerations corresponding to those for the multilayer film of Fig. 1a, apply here.

73. In another especially preferred embodiment, the multilayer film comprises one or more further easily damagable, in particular destructible and/or irreversibly deformable and/or permanently distortable, continuous layers (6). Especially preferred are embodiments comprising one additional layer (6). Layer (6) exhibits a limited internal strength $I_6$ at break in the cross-direction which preferably is comparable to ${}^{a}I_2$ or ${}^{c}I_2$:

$$I_6 \geq {}^{a}I_2 \text{ and/or } I_6 \geq {}^{c}I_2.$$

74. Layer (6) preferably comprises a heat-activatable adhesive or a pressure-sensitive adhesive with heat-activatable adhesives being preferred. Especially suitable examples of the heat-activatable adhesives include Guttacoll PE 90 (EVA hot melt adhesive, available through Guttacoll Klebstoffe GmbH & Co., Buxtehude) and Elvax 550 (EVA hot melt adhesive with an ethylene to vinyl acetate ratio of about 85:15, available through Du Pont). A preferred example of a pressure sensitive adhesive is an adhesive based on copolymers of acrylic acid esters.

75. Layer (2) and layer (6) can exhibit an identical or different composition. Layer (6) is a three-dimensional continuous layer the thickness of which preferably is at least 10 μm and, more preferably, at least 15 μm. The thickness of layer (6) preferably is between 20-200 μm and more preferably between 30-150μm. The sum of the thicknesses of layers (2) and (6) preferably is between 30-400 μm and more preferably between 40-300μm.

76. Layer (6) can be incorporated into the multilayer film at various positions but multi layer films wherein layer (6) is adjacent to layer (2) are especially preferred. In a preferred method of preparation of a multilayer film with the layer sequence (1)/(6)/(2)/(3), layer (6) is laminated to cover layer (1) at a temperature of about 80 - 150°C. The laminate thus obtained, is laminated to a laminate of layers (2) and (3) at a temperature of about 110 - 150°C in a way that layer (6) is laminated to layer (2). The laminate of layers (2) and (3) is preferably obtained as was described above. This method of preparation is intended to be merely illustrative, and can easily be modified by the person skilled in the art to provide multilayer films with a different layer sequence and/or to take into account specific properties of the materials used for layers (1), (2), (3) and (6).

77. Fig. 5a shows a preferred multilayer film according to the present invention exhibiting the layer sequence (1)/(5)/(6)/(2)/(3) in intact form.

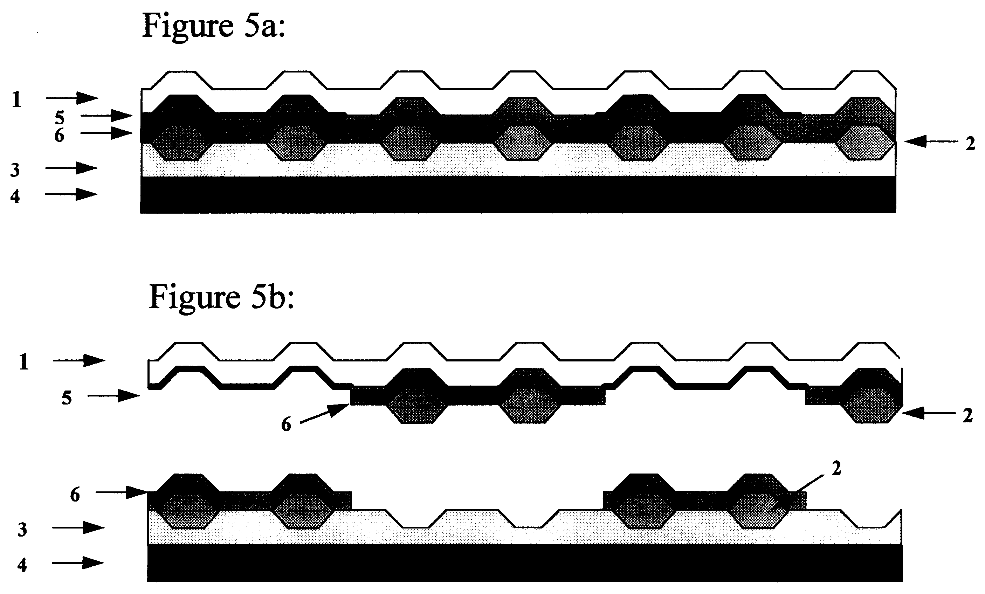

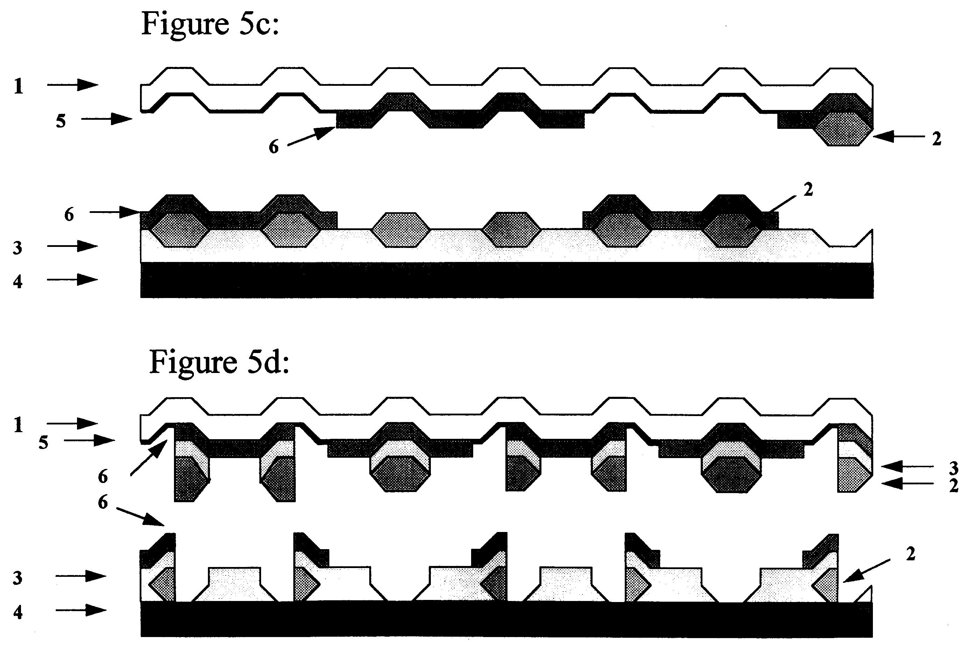

78. If attempts are made to remove the multilayer film from substrate (4), continuous layer (6) will separate cleanly from cover layer (1) in areas where the adhesion regulating pattern (5) is present, as is shown in the failure patterns of Figs. 5b and 5c. The behavior in the other areas is influenced by the relative magnitude of adhesive strengths $A_{16}$ between cover layer (1) and continuous layer (6), $A_{26}$ between the precursor of discontinuous layer (2) and layer (6) and $A_{23}$ but also by other factors as was discussed above.

79. In the failure pattern according to Fig. 5b, the multilayer film breaks through layers (2) and (6) whereas layer (2) remains essentially intact in case of Fig. 5c where the film mainly breaks through layer (6).

80. A more complicated failure pattern can be obtained when reducing the diameter of the elements or segments of the adhesion regulating pattern (5) as is shown in Fig. 5d. In this case, the elements or segments of the adhesion regulating pattern (5) are smaller than the elements or segments of the discontinuous pattern (2).

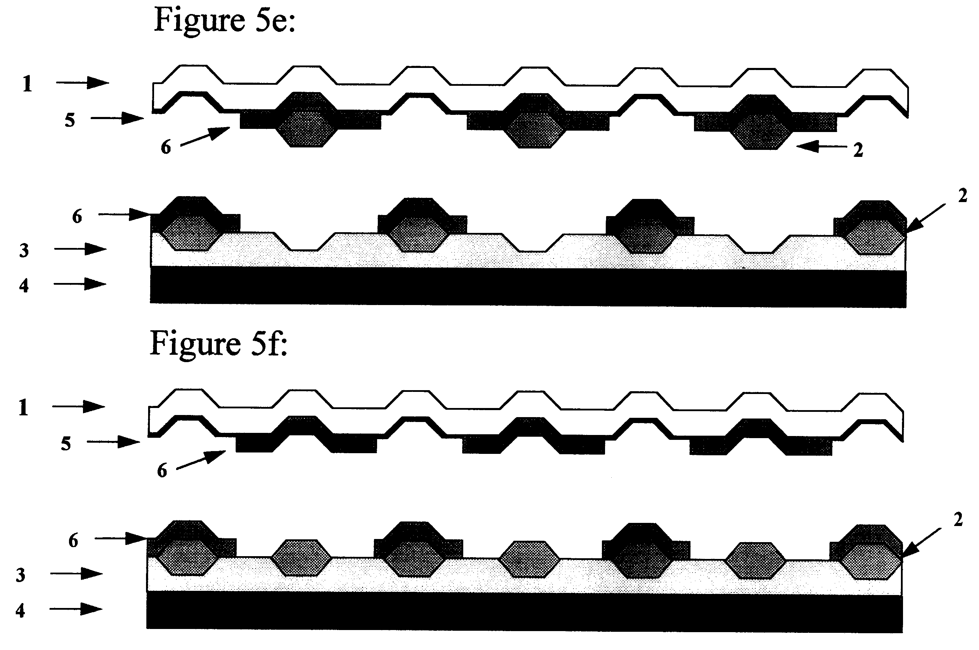

81. Figs. 5e and 5f show failure patterns similar to those of Figs. 5b and 5c for the case that the dimensions of the elements or segments of patterns (5) and (2) are comparable.

82. The failure patterns of Figs. 5b - 5f shown for the multilayer film of Fig. 5a or for modified constructions having release patterns (5) with different dimensions of the elements or segments, respectively, illustrate the response of the intact multilayer film to tampering. It should be noted that the representations of Figs. 5a - 5f are simplified and schematic only. When tampering starts, the layers (1) - (6) of the film will start to deform irreversibly first with the degree of deformation being different for the different layers. When the peeling force continues to be applied, the film will finally break. The failure patterns shown are illustrative but by no means limiting. Various other failure patterns are possible and considerations corresponding to those for the multilayer film of Fig. 1a, apply here.

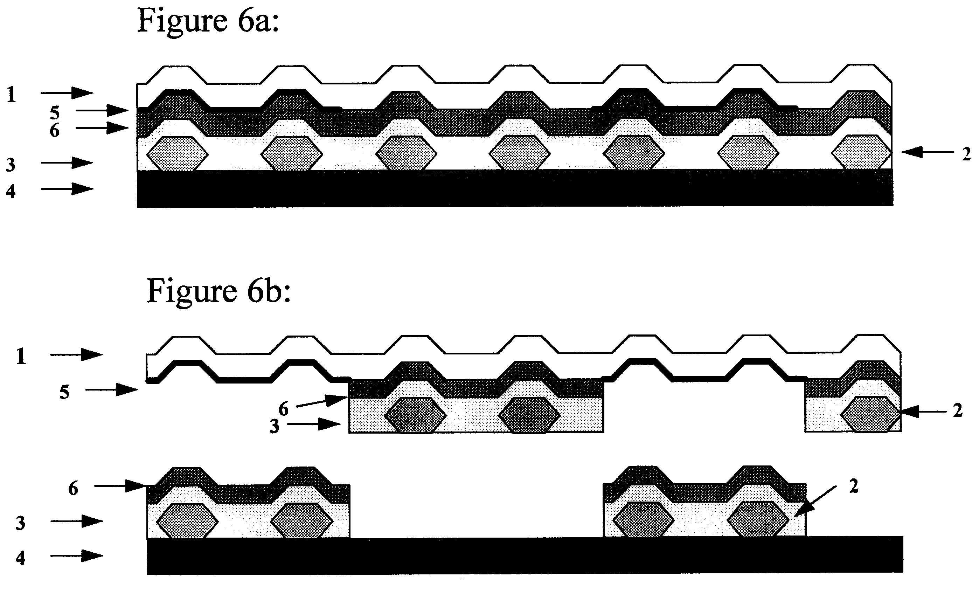

83. Fig. 6a shows a multilayer film according to the invention exhibiting the layer sequence (1)/(5)/(6)/(3)/(2) in intact form. In areas where the adhesion regulating pattern (5) is present, layer (6) essentially cleanly separates from layer (1) while the situation is different in the other areas. Fig. 6b shows a simplified and schematic failure pattern where the multilayer film breaks through layers (6), (3) and (2). Various other failure patterns are possible and considerations corresponding to those for the multilayer film of Fig. 1a, apply here.

84. In another embodiment of the multilayer films according to the present invention, a second pattern of adhesion regulating material (5') can be provided, for example, between layers (2) and (3) between layer (6) and (3) for the purpose of increasing the adhesion differences. The second adhesion regulating pattern (5') is preferably arranged so that it is non-superimposable with the first adhesion regulating pattern (5). It is also possible to place the second adhesion regulating pattern (5') at other positions within the multilayer film.

85. In another embodiment, one or more further layers of adhesive (3') may be placed, for example, between cover layer (1) which optionally may be provided with a pattern of adhesion regulating material (5), and adjacent damagable layer (2) or (6). The additional adhesive layer (3') may be made of the same adhesive as is used for first adhesive layer (3), or of another adhesive. When layers of adhesive are provided both above and below damagable layers (2) and/or (6), then these layers must not be adhesive in nature themselves but can comprise non-tacky materials with a limited internal strength in cross-direction at break such as, for example, surface-treated non-oriented polypropylene or linear low density polyethylene (LLDPE).

86. In a further embodiment, the multilayer film comprises a brittle, frangible material which breaks as a result of tampering attempts. Examples of materials suitable for this embodiment of the invention include acrylic resins which are self-crosslinked through acrylamide groups, for example the commercially available products Jagotex SV 211 and Jagotex SV 212 from Ernst Jäger GmbH, Germany. These Jagotex materials are not adhesives and are typically fixed in the multi layer film by an additional adhesive layer (3'). A transparent filler which further increases the brittleness, such as glass microspheres, can be built into this layer. The glass microspheres result in a inhomogeneous layer and increase its tendency to break easily when forces are applied, especially tensile forces. In case of a tampering attempt, the brittle, frangible material will result in irregularly broken edges, the parts of which cannot be perfectly fit together again, thus rendering the multilayer film irreparably destroyed.

87. In another preferred embodiment of the present invention, an additional verification marking (7) - besides the inherent verification marking imparted to the multilayer film by the discontinuous, three-dimensional pattern of layer (2) - is present within the multilayer film. The additional verification marking (7) can be, for example, a customer-specific printing or a hot stamp hologram or kinegram, and is optionally fixed by an additional adhesive layer (3'). Due to the frangibility of hot stamp holograms and kinegrams, layer (2) preferably does not extend to areas where the hologram or kinegram is present. When carefully choosing the lamination condition it is, however, also possible to prepare multilayer films comprising hot stamp holograms and/or kinegrams and the discontinuous pattern of layer (2) in the same area of the film.

88. Verification printings can be obtained, for example, by applying ink via screen printing or flexographic printing techniques. The additional verification marking (7) can be, for example, a frame-like pattern or a pattern of transparent lines, and it typically covers only part of the area of the multilayer film. The verification marking can be such that it is visible with the naked eye or with the assistance of other radiation sources such as a UV lamp.

89. The additional layers and construction elements described are intended to illustrate the invention without limiting it. The additional layers and construction elements can be introduced into the basic multilayer films having a layer sequence (1)/(2)/(3) or (1)/(3)/(2) thus modifying and/or optimizing these films with respect to specific applications. The additional layers are preferably applied by using laminating and/or printing methods.

90. The operation principle of the multilayer films according to the present invention which was demonstrated referring to the simplified and schematic representations of Fig. 1-6, is essentially based on the presence of destructible or irreversibly deformable, respectively, discontinuous layer (2) which introduces a 3-dimensional watermark into the film which is easily frangible due to its low internal strength $^a l_2$ or $^c l_2$, respectively, and is both tangible and visible.

91. It is this combination which imparts a high resistance against tampering to the multilayer films according to the present invention. The multilayer films according to the present invention are therefore highly useful for the protection of data on documents or as tamper-proof labels.

92. The following examples serve to illustrate the invention without limiting it in scope. Prior to this, some test methods are described which are applied to characterize the adhesion between different layers used ford the preparation of the multilayer film, and the internal strength of damagable layers (2) and (6), respectively.

93. <u>Adhesion $A_{16}$ between cover layer (1) and destructible layer (6)</u>

A 1.27 cm wide strip of aluminum was laminated to PET at 130°C using a 1.27 cm wide strip of layer (6). The test samples were then subjected to a T-peel test as is described by ASTM D1876-61T. The adhesion was measured in N/1.27 cm.

94. <u>Adhesion $A_{23}$ or $A_{36}$ between adhesive layer (3) and destructible layer (6) or the continuous precursor of discontinuous layer (2), respectively.</u>

A 1.27 cm wide strip of adhesive layer (3) and the continuous precursor of layer (2) or layer (6), respectively, were laminated at 130°C. The resulting composite was laminated at 130°C between two aluminum strips and then subjected to a T-peel test as specified above. The adhesion was measured in N/1.27 cm.

95. <u>Adhesion $A_{26}$ between layer (6) and the continuous precursor of discontinuous layer (2)</u>

A 1.27 cm wide strip of the continuous precursor of layer (2) and layer (6) were laminated at 130°C. The resulting composite was laminated at 130°C between two aluminum strips and then subjected to a T-peel test as specified above. The adhesion was measured in N/1.27 cm.

96. <u>Adhesion $A_{34}$ between adhesive layer (3) and substrate (4).</u>

A 1.27 cm wide strip of PSA transfer film (3) was laminated between a polyester film and a paper frequently used for documents (Neobond paper, provided by Papierfabrik Lahnstein GmbH, Germany). The laminates were conditioned for 24 h at room temperature and 50 % relative humidity and then subjected to a 90° peel test. The adhesion was measured in N/1.27 cm.

97. <u>Internal strength of destructible or irreversibly deformable, respectively, discontinuous, three-dimensional layer (2).</u>

The thickness of layer (2) was determined first. Then the tensile strength of 2.54 cm wide strips was measured in the machine and cross direction at 5% and 10% elongation as well as at the breaking point, tearing with a speed of 300 mm/min. The measured tensile strength was multiplied by the longitudinal section or cross-section of layer (2), respectively (length or width, respectively, times thickness), to obtain the absolute value of the force necessary to tear the sample. The internal strength was measured in N.

98. <u>Internal strength of destructible layer (6)</u>

The thickness of layer (6) was determined first. Then tensile strength of 2.54 cm wide stripes was measured in machine and cross direction at 5% and 10% elongation as well as at the breaking point, tearing with a speed of 300 mm/min. Tensile strength was multiplied with the longitudinal section or cross-section of layer (6), respectively (length or width, respectively, times thickness) to obtain the absolute value of the force necessary to tear the sample. The internal strength was measured in N.

<u>Example 1</u>

99. A transparent multilayer film as shown in Fig. 5a is prepared in the following manner. A dot pattern (5) of a mixture of a silicone-acrylate mixture [Th. Goldschmidt AG: RC 726/KN 7060 = 70/30 weight percent] together with 3 weight percent of 2-hydroxy-2-methyl-1-phenyl-propane-1-1 as photoinitiator [Merck: Darocure 1173] is applied to a 50 μm thick corona discharge treated polyester film (PET) (1) using a suitably embossed roll built into a 5-roll coating-system. The pattern (5) obtained covers 25% of the surface of the film and the diameter of the dots is 0.5 cm. The coating is then cured using a medium pressure mercury lamp under inert gas conditions. The coating weight is less than 5 g/m2.

100. A 40 μm thick ethylene vinyl acetate film (6) (heat-activatable adhesive) [Guttacoll: PE90/40; ethylene/vinyl acetate copolymer] which is corona discharge treated on both sides is then laminated to the printed side of the PET film (1) using a commercially available heat laminator at 130°C.

101. Then a polyamide heat-activatable adhesive film (2) (Texiron™ 116/30, commercially available through Protechnic Comp., Cernay, France, maximum film thickness 250 μm, base weight 30 g/m2) which is die-cut to provide a grid-shaped pattern according to Fig. 7a (rhombic meshes with a mesh size of 3.5 x 5.5 mm, diameter of outside and reinforcing bars 0.3 mm) is laminated onto the ethylene vinyl acetate film (6) using a commercially available heat laminator at 130°C. A release liner is used during the lamination of layers (2) and (6) in order to avoid bonding of the layers to the nip roll.

102. Then a 50 μm thick layer of acrylate-based pressure-sensitive adhesive (3) in the form of a transfer film on a release paper (3M Transfer Tape #9470, tackified with resin) is laminated to the layer of the heat-activatable adhesive (2) at room temperature.

103. The release paper is then removed and the laminate pressed onto a document (4) [Papierfabrik Lahnstein: Neobond] using a commercially available laminator at room temperature.

104. After 24 hours aging, the laminate is carefully removed by hand from the document. In the areas of the dot pattern (5), the PET film (1) separates from the ethylene vinyl acetate film (6), while in the remaining areas it continues to adhere. Thus the ethylene vinyl acetate layer (6) and the adjacent grid-shaped polyamide layer (2) stretch until they finally break. Thus, in the areas of the adhesion-regulating dot pattern (5), residues of the ethylene vinyl acetate layer (6), of the grid-shaped polyamide layer (2) and of the adhesive layer (3) remain on the surface of the document (4). In the other areas, the grid-shaped polyamide layer (2) essentially separates from adhesive layer (3) so that the ethylene vinyl acetate layer (6) and the grid-shaped polyamide layer (2) remain adhered to the PET cover layer (1). In these other areas, the adhesive layer (3) exhibits an irregularly embossed surface caused by grid-shaped polyamide layer (2). The failure pattern observed is schematically shown in Fig. 5b.

105. The multilayer film exhibited the following values of adhesion and internal strength:

| | |
|---|---|
| adhesion $A_{16}$ between cover layer (1) and damagable layer (6) | 7.7 N/1.27 cm. |
| adhesion $A_{36}$ between adhesive layer (3) and damagable layer (6) | 8.9 N/1.27 cm |
| adhesion $A_{34}$ between adhesive layer (3) and document (4) | 12.2 N/1.27 cm |
| adhesion $A_{23}$ between the continuous precursor of layer (2) and adhesive layer (3) | 11.3 N/1.27 cm |
| adhesion $A_{26}$ between the continuous precursor of discontinuous layer (2) and layer (6) | 10.8 N/1.27 cm |
| internal strength of damagable layer (6) as measured in the machine direction (MD) or cross-direction (CD), respectively, at 5% elongation; 10% elongation; at break: | MD: 1.6; 2.4; 4.7 N<br>CD: 1.4; 2.0; 4.0 N |
| internal strength of discontinuous layer (2), as measured in the machine direction (MD) or cross-direction (CD), respectively, at 5% elongation; 10% elongation; at break: | MD: 7.4; 13.0; 19.4 N<br>CD: 0.14; 0.17; 1.9 N |

106. Example 2

Example 1 was repeated with the exception that Texiron™ polyamide (PA) 116/20 (available through Protechnic Comp., Cernay, France) was used for layer (2). This discontinuous film exhibits a pattern according to Fig. 7a (rhombic meshes with a mesh size of 3.5 x 5.5 mm, diameter of outside and reinforcing bars 0.3 mm). The maximum thickness is 170 μm and the base weight is 20 g/m2. Properties of the layer (2) used for the preparation of the multilayer film, are summarized in Table I.

107. Example 3

Example 1 was repeated with the exception that Texiron™ Polyamide (PA) 126 (available through Protechnic Comp., Cernay, France) was used for layer (2). This discontinuous film exhibits a pattern according to Fig. 7a (rhombic meshes with a mesh size of 3.5 x 5.5 mm, diameter of outside and reinforcing bars 0.3 mm). The maximum thickness is 210 μm and the base weight is 27 g/m2.
Properties of the layer (2) used for the preparation of the multilayer film, are summarized in Table I.

108. Example 4

Example 1 was repeated with the exception that Texiron™ polyethylene vinyl acetate (EVA) 322 (available through Protechnic Comp., Cernay, France) was used for layer (2). This discontinuous film exhibits a pattern according to Fig. 7b (rhombic meshes with a mesh size of 3.5 x 5.5 mm, diameter of outside bars 0.6 mm). The maximum thickness is 265 μm and the base weight is 35 g/m2.
Properties of the layer (2) used for the preparation of the multilayer film, are summarized in Table I.

109.<u>Example 5</u>

Example 1 was repeated with the exception that Texiron™ polyethylene vinyl acetate (EVA) 332 (available through Protechnic Comp., Cernay, France) was used for layer (2). This discontinuous film exhibits a pattern according to Fig. 7b (rhombic meshes with a mesh size of 3.5 x 5.5 mm, diameter of outside bars 0.6 mm). The maximum thickness is 240 $\mu$m and the base weight is 28 g/m2.

Properties of the layer (2) used for the preparation of the multilayer film, are summarized in Table I.

110.<u>Example 6</u>

Example 1 was repeated with the exception that Texiron™ polyurethane (PU) 622 (available through Protechnic Comp., Cernay, France) was used for layer (2). This discontinuous film exhibits a pattern according to Fig. 7b (rhombic meshes with a mesh size of 3.5 x 5.5 mm, diameter of outside bars 0.6 mm). The maximum thickness is 170 $\mu$m and base weight is 30 g/m2.

Properties of the layer (2) used for the preparation of the multilayer film, are summarized in Table I.

111.<u>Example 7</u>

Example 1 was repeated with the exception that Texiron™ polyethylene terephthalate (PET) 925 (available through Protechnic Comp., Cernay, France) was used for layer (2). This discontinuous film exhibits a pattern according to Fig. 7a (rhombic meshes with a mesh size of 3.5 x 5.5 mm, diameter of outside bars 0.3 mm). The maximum thickness is 210 $\mu$m and the base weight is 35 g/m2.

Properties of the layer (2) used for the preparation of the multilayer film, are summarized in Table I.

112.<u>Example 8</u>

Example 1 was repeated with the exception that Texiron™ polyethylene terephtalate (PET) 946 (available through Protechnic Comp., Cernay, France) was used for layer (2). This discontinuous film exhibits a pattern according to Fig. 7a (rhombic meshes with a mesh size of 3.5 x 5.5 mm, diameter of outside bars 0.3 mm). The maximum thickness is 250 $\mu$m and the base weight is 30 g/m2.

Properties of the layer (2) used for the preparation of the multilayer film, are summarized in Table I.

113.<u>Example 9</u>

Example 1 was repeated with the exception that Texiron™ polyamide (PA) 121 (available through Protechnic Comp., Cernay, France) was used for layer (2). This discontinuous film exhibits a pattern according to Fig. 7b (rhombic meshes with a mesh size of 2.5 x 4 mm, diameter of outside bars 0.3 mm). The maximum thickness is 245 $\mu$m and the base weight is 40 g/m2.

Properties of the layer (2) used for the preparation of the multilayer film, are summarized in Table I.

114.<u>Example 10</u>

Example 1 was repeated with the exception that Texiron™ polyamide (PA) 115 (available through Protechnic Comp., Cernay, France) was used for layer (2). This discontinuous film exhibits a hexagonal pattern (regular hexagones with a side length of 4.5 mm, diameter of outside bars 0.3 mm). The maximum thickness is 70 $\mu$m and the base weight is 20 g/m2.

Properties of the layer (2) used for the preparation of the multilayer film, are summarized in Table I.

115.<u>Example 11</u>

A transparent multilayer film as shown in Fig. 6a was prepared according to the method described in Example 1 with the exceptions that the acrylate-based pressure sensitive adhesive layer (3) was laminated in the form of a transfer film on a release paper (3M Transfer Tape # 9470, tackified with resin) onto layer (6) at room temperature first, that the polyamide heat-activatable adhesive film (2) (Texiron™ 116/30) was laminated onto adhesive layer (3) at 130°C and that the resulting multilayer film was pressed onto document (4) [Papierfabrik Lahnstein: Neoband] at a temperature of 130°C. The other conditions were chosen as in Experiment 1 above.

116. Example 12

A transparent multilayer film as shown in Fig. 4a was prepared according to the method described in Example 11 with the exception that layer (6) was left out and that the acrylate-based pressure sensitive adhesive layer (3) was laminated in the form of a transfer film on a release paper (3M Transfer Tape # 9470, tackified with resin) at room temperature onto the printed side of the PET film (1) exhibiting the pattern (5) of adhesion regulating material.

117. Example 13

A transparent multilayer film as shown in Fig. 3a was prepared according to the method described in Example 1 with the exception that layer (6) was left out and that the polyamide heat-activatable adhesive film (2) (Texiron™ 116/30) was laminated at a temperature of 130°C onto the printed side of the PET film (1) exhibiting the pattern (5) of adhesion regulating material.

118. Example 14

A transparent multilayer film as shown in Fig. 2a was prepared according to the method described in Example 12 with the exception that the pattern (5) of adhesion regulating material (silicone-acrylate mixture, available through Th. Goldschmidt AG: RC 726/KN 7060 in a ratio of 70/30 percent by weight) was left out and that the acrylate-based pressure sensitive adhesive layer (3) was laminated in the form of a transfer film on a release paper (3M Transfer Tape # 9470, tackified with resin) at room temperature onto the cover layer (1) (50 μm thick, corona discharge treated polyester film).

119. Example 15

A transparent multilayer film as shown in Fig. 1a was prepared according to the method described in Example 13 with the exception that the pattern (5) of adhesion regulating material (silicone-acrylate mixture, available through Th. Goldschmidt AG: RC 726/KN 7060) was left out and that the polyamide heat-activatable adhesive film (2) (Texiron™ 116/30) was laminated at a temperature of 130°C onto the cover layer (1) (50 μm thick, corona discharge treated polyester film).

120.

Table I

| Properties of layer (2) used for the preparation of the multilayer films | | |
|---|---|---|
| Example | $^a l_2$ [N] | $^c l_2$ [N] |
| 1 | 19.4 | 1.9 |
| 2 | 13.8 | 1.3 |
| 3 | 24.4 | 1.7 |
| 4 | 4.0 | 1.2 |
| 5 | 1.9 | 0.8 |
| 6 | 3.3 | 1.7 |
| 7 | 15.8 | 3.2 |
| 8 | 7.8 | 1.2 |
| 9 | 3.8 | 1.1 |
| 10 | 1.4 | 1.0 |

## Claims

1. Multilayer film, comprising a cover layer (1) bearing on one side a damagable layer (2), and at least one adhesive layer (3) for bonding with a substrate (4), wherein the sequence of layers (2) and (3) may be reversed, said layer (2) exhibiting a three-dimensional pattern imparting a three-dimensional, tangible verification marking to the film, and said film showing intralayer failure when being peeled from the substrate.

2. Multilayer film according to claim 1 wherein layer (2) has a thickness of at least 10 µm.

3. Multilayer film according to any one of claims 1-2 wherein the average diameter of the elements or segments of the 3-dimensional pattern of layer (2) is 20 mm or less.

4. Multilayer film according to any one of claims 1-3 wherein layer (2) exhibits recesses and/or elevations whereby the sum of the areas of recesses and/or elevations with respect to the total area of layer (2) is from 0.01 to 0.85.

5. Multilayer film according to any one of claims 1-4 wherein the arithmetic mean $^a l_2$ of the internal strength at break in the cross-direction $^c l_2$ and the internal strength at break in the machine-direction $^m l_2$ is less than 12 N.

6. Multilayer film according to any one of claims 1-5 wherein the arithmetic mean $^a l_2$ of the internal strength at break in the cross-direction $^c l_2$ and the internal strength at break in the machine-direction $^m l_2$ is less than 9 N, and wherein the internal strength at break in the cross-direction $^c l_2$ is less than 4.5 N.

7. Multilayer film according to any one of claims 1-6 wherein said cover layer (1) comprises an abrasion resistant, optionally surface-treated polymeric film.

8. Multilayer film according to claim 7, wherein said cover layer (1) comprises a corona-treated, flame-treated, plasma-treated or chemically primed polyethylene terephthalate (PET) film.

9. Multilayer film according to any one of claims 1-8 comprising one or more patterns of adhesion regulating material (5).

10. Multilayer film according to claim 9 wherein a pattern of adhesion-regulating material (5) is present between cover layer (1) and the following layer.

11. Multilayer film according to claim 9 wherein the average diameter of the elements or segments of the adhesion regulating material is larger than the average diameter of the elements or segments of layer (2).

12. Multilayer film according to any one of claims 1-11 comprising one or more damagable, in particular destructible or irreversibly deformable or pemanently distortable, continuous layers (6).

13. Multilayer film according to any one of claims 1 to 12 wherein layer (6) and/or layer (2) and/or adhesive layers (3) comprise, independently from each other, a heat-activatable adhesive or a pressure sensitive adhesive.

14. Multilayer film according to claim 13 wherein the hot-melt adhesive is selected from a group comprising ethylene vinyl acetates, ethylene acrylic acid copolymers, ethylene methacrylic acid copolymers, polyesters, polyurethanes or polyamides.

15. Multilayer film according to any one of claims 1-14 comprising one or more verification markings (7).

16. Multilayer films according to claim 15 wherein the verification-markings (7) are independently from each other, printings, holograms and/or kinegrams.

17. Multilayer film according to any one of claims 1-16 comprising any one of the layer sequences: (1)/(5)/(2)/3, (1)/(5)/(3)/(2), (1)/(5)/(6)/(2)/(3) and (1)/(5)/(6)/(3)/(2).

18. Multilayer film according to any of any one of claims 1-17, wherein said damagable layer (2) is permanently distortable or destructible or irreversibly deformable.

19. Multilayer film according to any of any one of claims 1-18, wherein said three-dimensional pattern is discontinuous.

20. Use of a multilayer film according to any one of claims 1-19 for protection of data on documents or as a tamper-proof label.

21. Tamperproof document or label comprising a multilayerfilm according to any one of claims 1-19 bonded to a substrate (4) carrying information or data.

Figure 1a:

Figure 1b:

Figure 1c:

Figure 1d:

# Figure 1e:

1 →
3 →
4 →

2

2

4 →

EP 0 755 776 A1

# Figure 1f:

1 →
3 →

2

3 →
4 →

# Figure 1g:

1 →

2

3 →

4 →

EP 0 755 776 A1

# Figure 1h:

1 →

3 →

2

3 →

4 →

# Figure 2a:

1 →
3 →
4 →

← 2

# Figure 2b:

1 →
3 →

← 2

3 →
4 →

← 2

## Figure 3a:

## Figure 3b:

EP 0 755 776 A1

Figure 4a:

Figure 4b:

## Figure 5a:

## Figure 5b:

EP 0 755 776 A1

Figure 5c:

Figure 5d:

Figure 5e:

Figure 5f:

## Figure 6a:

1 →
5 →
6 →
3 →
4 →

← 2

EP 0 755 776 A1

## Figure 6b:

1 →
5 →
6 →
3 →

← 2

6 →
3 →
4 →

2

Fig. 7b

Fig. 7a

MD

CD

EP 0 755 776 A1

EP 0 755 776 A1

| | European Patent Office | EUROPEAN SEARCH REPORT | Application Number EP 95 20 2069 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | DE-A-20 59 108 (WEISS, EDMUND FRIEDRICH) 8 June 1972 * page 2, paragraph 3 - page 8, paragraph 1; figures 1-4 * | 1-4,20, 21 | B32B27/08 G09F3/02 B42D15/10 |
| X A | WO-A-88 05728 (DE LA RUE THOMAS & CO LTD) 11 August 1988 * page 2, line 1 - page 3, line 23; claims; figures 1,2 * | 1 15,16 | |
| X | EP-A-0 043 552 (HOECHST AG) 13 January 1982 * claims; examples 1,3 * | 1 | |
| X | EP-A-0 629 990 (OMAPI SA) 21 December 1994 * claim 1; figure 3 * | 1,20,21 | |
| A | US-A-4 184 701 (FRANKLIN PRISCILLA S ET AL) 22 January 1980 * claim 1; figure 3 * | 1,20,21 | |
| A | EP-A-0 491 099 (KENDALL & CO) 24 June 1992 * page 3, line 17 - page 4, line 2; figure * | 1,20,21 | TECHNICAL FIELDS SEARCHED (Int.Cl.6) B32B G09F B42D |
| A | EP-A-0 398 635 (MINNESOTA MINING & MFG) 22 November 1990 * column 6, line 42 - column 7, line 3; figures 1,2 * | 1,9,10, 20,21 | |
| A | US-A-4 246 307 (TRAUTWEIN HANSJOERG) 20 January 1981 * claim 1 * | 1,9,10, 20,21 | |
| A | US-A-5 380 695 (CHIANG YUNN H ET AL) 10 January 1995 * claims; figures 1,2 * | 1,20,21 | |

The present search report has been drawn up for all claims

| Place of search | Date of completion of the search | Examiner |
|---|---|---|
| THE HAGUE | 18 December 1995 | De Jonge, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

28